# EUROPÄISCHE PATENTANMELDUNG

(11) **EP 4 664 150 A1**
(43) Veröffentlichungstag der Anmeldung: **17.12.2025**
(21) Anmeldenummer: 24181204.9
(22) Anmeldetag: 10.06.2024
(51) Int. Cl.: G01S 7/481, G01S 17/10, G01S 17/34, G01S 17/42, G01S 17/89

(54) **LASERSCANNER**

(71) Anmelder: RIEGL Laser Measurement Systems GmbH, 3580 Horn (AT)
(72) Erfinder: REICHERT, Rainer, 3580 Horn (AT); RIEGL, Johannes, 3754 Trabenreith (AT)
(74) Vertreter: Weiser Voith Gugler Patentanwälte Partnerschaft

(57) **Zusammenfassung**

Ein Laserscanner zum Scannen einer Umgebung (2) umfasst einen Lasersender (3) zum Aussenden eines Sendestrahls (4); eine um eine Drehachse (9) drehbare Welle (10); ein den Sendestrahl (4) ablenkendes entweder reflektierendes oder brechendes optisches Element (5, 5'), welches zum Auffächern des Sendestrahls (4) entlang eines Kegelmantels (11) oder Kegelmantelsegments an der Welle (10) gegenüber dieser drehfest gelagert ist; und einen Empfänger (6) zum Empfangen des an der Umgebung (2) reflektieren Sendestrahls (4) als Empfangsstrahl (7); wobei der Empfänger (6) eine Aperturblende (13) aufweist, welche an der Welle (10) gegenüber dieser drehfest gelagert ist, um das Sichtfeld (12) des Empfängers (6) dem am optischen Element (5, 5') abgelenkten Sendestrahl (4) nachzuführen.

## Beschreibung

Die vorliegende Erfindung betrifft einen Laserscanner zum Scannen einer Umgebung, welcher einen Lasersender zum Aussenden eines Sendestrahls, eine um eine Drehachse drehbare Welle, ein den Sendestrahl ablenkendes entweder reflektierendes oder brechendes optisches Element, welches zum Auffächern des Sendestrahls entlang eines Kegelmantels oder Kegelmantelsegments an der Welle gegenüber dieser drehfest gelagert ist, und einen Empfänger zum Empfangen des an der Umgebung reflektieren Sendestrahls als Empfangsstrahl umfasst.

Derartige Laserscanner werden stationär aufgestellt oder von einem Land-, Wasser- oder Luftfahrzeug mitgeführt, um eine Umgebung wie eine Landschaft, einen Steinbruch, ein Gebäude, einen Straßenzug, eine Stadt, einen Gewässergrund, eine Wolke usw. zu scannen. Vom Laserscanner aus wird ein gepulster oder modulierter Sendestrahl mithilfe des sich mit der Welle mitdrehenden optischen Elements auf viele Ziele (auch: "Abtastpunkte") der Umgebung ausgesandt. Aus Laufzeitmessungen des reflektierten Sendestrahls, d.h. des Empfangsstrahls, werden die Zielentfernungen und daraus - in Kenntnis der Position und Lage des Laserscanners und der jeweiligen Sendestrahlrichtung - z.B. ein Punktemodell ("3D-Punktwolke") der Umgebung erstellt.

Um den Empfangsstrahl tatsächlich im Empfänger empfangen zu können, ist es notwendig, dass der Auftreffpunkt des Sendestrahls auf der Umgebung stets im Sichtfeld des Empfängers liegt.

Zu diesem Zweck ist bekannt, entweder ein entsprechend großes Sichtfeld des Empfängers vorzusehen, was jedoch zu einem schlechten Signal-Rausch-Verhältnis führt, oder das Sichtfeld des Empfängers ebenfalls über das optische Element auf die Umgebung zu richten, um den Empfangsstrahl über das sich drehende optische Element zu empfangen. Dies hat jedoch mehrere Nachteile: Über das optische Element, welches zugleich den Sendestrahl ablenkt, werden auch Streu-Reflexionen des Sendestrahls innerhalb des Laserscanners in den Empfänger eingekoppelt und dadurch Fehlmessungen hervorgerufen, der Empfänger übersteuert und/oder das Signal-Rausch-Verhältnis verschlechtert. Ferner müssen der Lasersender oder ein Einkoppelspiegel für den Sendestrahl aus Platzgründen im Allgemeinen im Sichtfeld des Empfängers angeordnet werden, wo sie einen Teil des Sichtfelds verdecken, sodass Empfangsleistung verloren geht. Überdies dreht sich das optische Element während der Laufzeit der Sende- und Empfangsstrahlen um den sogenannten "Lag-Winkel" weiter, sodass der Empfangsstrahl aus dem Sichtfeld des Empfängers wandert. Um den Lag-Winkel zu kompensieren, kann dem Empfänger entweder ein Spiegel vorgeschaltet werden, was die Komplexität des Empfängers erhöht, oder das Sichtfeld des Empfängers verbreitert werden, woraufhin mehr unerwünschtes Umgebungslicht einfällt und das Signal-Rausch-Verhältnis verschlechtert.

Im Stand der Technik sind auch Empfänger bekannt, deren Sichtfeld nicht auf das sich mit der Welle mitdrehende optische Element gerichtet ist, sondern auf eine eigens dafür vorgesehene, unabhängig bewegliche Strahlablenkeinrichtung, welche das Sichtfeld dem Sendestrahl nachführt. Bei solchen Empfängern ist jedoch eine aufwändige Synchronisierung der Bewegung der Strahlablenkeinrichtung mit der Drehung des optischen Elements notwendig und zusätzlich eine komplexe Kalibrierung, welche über die Lebenszeit solcher Laserscanner regelmäßig wiederholt werden muss.

Die Erfindung setzt sich zum Ziel, einen Laserscanner mit verbesserten Empfangseigenschaften zu schaffen.

Dieses Ziel wird mit einem Laserscanner der einleitend genannten Art erreicht, welcher sich gemäß der Erfindung dadurch auszeichnet, dass der Empfänger eine Aperturblende aufweist, welche an der Welle gegenüber dieser drehfest gelagert ist, um das Sichtfeld des Empfängers dem am optischen Element abgelenkten Sendestrahl nachzuführen.

Erfindungsgemäß ist die zumindest eine Aperturblende des Empfängers, deren Apertur dessen Sichtfeld begrenzt, derart an der Welle gelagert, dass sie sich stets mit der Welle mitdreht, d.h. gegenüber der Welle drehfest ist. Die gegenüber der Welle drehfeste Lagerung des optischen Elements einerseits und der Aperturblende andererseits bewirkt, dass das Sichtfeld des Empfängers konstruktionsbedingt dem vom optischen Element abgelenkten Sendestrahl folgt. Das Sichtfeld läuft nach einfacher, einmaliger Justierung des optischen Elements und der Aperturblende dauerhaft synchron zum abgelenkten Sendestrahl. Eine aufwändige Synchronisierung bzw. Justierung voneinander unabhängig bewegter Elemente im Sende- und Empfangsstrahlengang entfällt. Einmal justiert verbleiben das optische Element und die über die Welle mitgedrehte Aperturblende über die Lebensdauer des Laserscanners in ihrer Relativposition, sodass Nachjustierungen des Laserscanners nicht notwendig sind. Bei der drehfesten Lagerung des optischen Elements und der Aperturblende an der Welle kann der Lag-Winkel für einen vorgesehenen Messbereich berücksichtigt, d.h. kompensiert, werden, indem das optische Element und die Aperturblende in Umfangsrichtung gegeneinander entsprechend verdreht gelagert werden. Nicht zuletzt kann der Sendestrahl im Inneren des Laserscanners vom Sichtfeld des Empfängers völlig getrennt geführt werden, sodass Streu-Reflexionen des Sendestrahls nicht in den Empfänger gelangen können, was zu einem verbesserten Signal-Rausch-Verhältnis führt.

Im Ergebnis wird durch die ebenfalls drehfest an der Welle gelagerte Aperturblende ein Laserscanner mit verbesserten Empfangseigenschaften geschaffen.

Das reflektierende oder brechende optische Element kann auf viele verschiedene Weisen gebildet sein, beispielsweise durch eine Spiegel- oder Glaspyramide mit zwei, drei, vier, oder mehr Seiten, um pro Seite den Sendestrahl entlang eines Kegelmantelsegments aufzufächern und die Umgebung infolgedessen entlang im Allgemeinen gebogener Scanlinien abzutasten. Dabei kann die Aperturblende eine Apertur für jede Seite aufweisen, durch die das Sichtfeld dem Sendestrahl während eines jeweiligen Teils der Umdrehung nachfolgt. In einer bevorzugten Ausführungsform ist hingegen das optische Element durch eine gegenüber der Drehachse geneigte Spiegelfläche oder eine Keilscheibe gebildet, um den Sendestrahl entlang eines Kegelmantels aufzufächern. Ein derartiges optisches Element ergibt einen einfachen drehsymmetrischen Aufbau. Im Gegensatz zu pyramidenförmigen optischen Elementen reicht dadurch eine einzige Apertur aus, um das Sichtfeld des Empfängers dem abgelenkten Sendestrahl über eine volle 360°-Drehung nachzuführen, was die Fertigung und Justierung des Laserscanners wesentlich vereinfacht.

Vorteilhaft ist, wenn der Laserscanner ferner eine der Aperturblende aus Sicht des Empfängers nachgeordnete Objektivlinse zum Parallelrichten des Sichtfelds des Empfängers umfasst. Ein solches Sichtfeld kann über weite Distanzen sehr schmal gehalten werden, sodass der Empfänger beim Scannen der Umgebung besonders wenig unerwünschtes Umgebungslicht empfängt. Folglich kann damit ein hohes Signal-Rausch-Verhältnis erzielt werden.

In einer kompakten Ausführungsform des Laserscanners ist die Objektivlinse im Inneren des Kegelmantels oder Kegelmantelsegments angeordnet. Dabei wird der vorhandene Bauraum innerhalb des vom Sendestrahl gebildeten Kegelmantels bzw. Kegelmantelsegments platzsparend für die Objektivlinse verwendet.

Einerseits kann das parallelgerichtete Sichtfeld des Empfängers im Wesentlichen parallel zum Sendestrahl ausgerichtet sein. Auf diese Weise wird die stets vorhandene Rest-Divergenz des Sendestrahls und/oder des Sichtfeldes hinter der Objektivlinse vorteilhaft verwendet, um beim Empfangen des Empfangsstrahls unerwünschte Nahreflexionen des Sendestrahls auszublenden und das Signal-Rausch-Verhältnis zu verbessern.

Andererseits kann das parallelgerichtete Sichtfeld des Empfängers vom Empfänger aus gesehen hinter der Objektivlinse zum Sendestrahl geneigt sein. Infolgedessen kreuzen das Sichtfeld und der Sendestrahl einander in einem gewissen Entfernungsbereich, der vom Durchmesser des Sichtfeldes, dem Abstand zwischen Sendestrahl und Sichtfeld beim Verlassen des Laserscanners und der Neigung des Sichtfeldes zum Sendestrahl abhängt und somit vorgewählt werden kann. Reflexionen an Zielen außerhalb dieses Entfernungsbereichs werden dadurch ausgeblendet. Um diesen Bereich auswählen zu können, kann optional eine steuerbare Optik der Objektivlinse vor- oder nachgeschaltet sein.

In der kompakten Ausführungsform des Laserscanners ist es vorteilhaft, wenn zwischen der Aperturblende und der Objektivlinse ein optisches Ablenkelement angeordnet ist, welches das Sichtfeld vom Empfänger aus gesehen zur Drehachse hin ablenkt. Da das optische Ablenkelement das Sichtfeld zur Drehachse hin ablenkt, kann die Apertur radial näher an der Drehachse liegen und die Aperturblende radial weniger auftragen, wodurch eine kompaktere Bauform und ein geringeres Trägheitsmoment erzielbar sind, sodass die Welle schneller drehen und die Umgebung somit schneller gescannt werden kann.

Bevorzugt ist das optische Ablenkelement eine Linse, sodass das Sichtfeld besonders platzsparend und einfach durch diese hindurch geführt werden kann. Die Linse kann optional ebenfalls drehfest an der Welle gelagert sein und nur einen kleinen Winkelbereich um die Drehachse einnehmen. Besonders bevorzugt ist die Linse aber eine das optische Element umschließende plankonvexe Ringlinse. Eine solche Ringlinse kann stationär abseits der Welle gelagert sein, um die Welle schneller drehen und die Umgebung schneller scannen zu können.

Um die Ausdehnung des Laserscanners in Richtung der Drehachse kurz zu halten, ist es günstig, wenn der Laserscanner einen im Strahlengang des Sendestrahls und im Sichtfeld des Empfängers angeordneten, gegenüber der Drehachse geneigten Umlenkspiegel zum Umlenken des Sendestrahls und des Sichtfelds des Empfängers quer zur Drehachse zur Umgebung hin umfasst. Dadurch kann der Laserscanner in einer flachen Ladebucht eines Fahrzeugs eingesetzt werden.

Dabei ist vorteilhaft, wenn der Sendestrahl am Umlenkspiegel außerhalb des Sichtfelds des Empfängers umgelenkt wird, um Nahreflexionen des Sendestrahls innerhalb des Laserscanners auszublenden und ein hohes Signal-Rausch-Verhältnis zu erzielen.

Der Empfänger kann zum Empfangen des Empfangsstrahls einen Detektor aufweisen, der auf verschiedene Weise gebildet sein kann und entweder an der Welle drehfest gelagert oder stationär abseits der Welle gelagert ist.

In einer bevorzugten Ausführungsform weist der Empfänger zum Empfangen des Empfangsstrahls einen koaxial zur Drehachse angeordneten ringförmigen Detektor auf. Eine solcher ringförmiger Detektor kann stationär abseits der Welle gelagert sein, um die Welle schneller drehen und die Umgebung damit schneller scannen zu können.

In einer alternativen vorteilhaften Ausführungsform weist der Empfänger zum Empfangen des Empfangsstrahls einen achszentral angeordneten Detektor auf und eine Führungseinrichtung zum Führen des Empfangsstrahls von der Aperturblende zum Detektor. Ein solcher Detektor benötigt nur einen geringen Bauraum und eine kleine Detektorfläche.

Die Führungseinrichtung dieser Ausführungsform kann auf verschiedene Weise gestaltet sein, z.B. nach einer der folgenden vorteilhaften Varianten.

In einer ersten Variante ist die Führungseinrichtung durch eine Glasfaser gebildet. Die Glasfaser ermöglicht eine einfache und verlustarme Führung des Empfangsstrahls mit nur einem optischen Bauteil.

In einer zweiten Variante ist die Führungseinrichtung durch ein Periskop gebildet. Ein Periskop kann besonders klein bauen. Darüberhinaus können die optischen Bauteile des Periskops, z.B. Spiegel oder Prismen, einfach drehfest an der Welle gelagert sein.

In einer dritten Variante ist die Führungseinrichtung durch eine Ablenklinse gebildet. Die Ablenklinse ist ein einfacher, leicht anzuordnender optischer Bauteil, der den Empfangsstrahl auf den achszentralen Detektor lenkt. Die Ablenklinse kann einerseits nur einen geringen Winkelbereich um die Welle einnehmen und drehfest an der Welle gelagert sein. Bevorzugt ist hingegen andererseits die Ablenklinse eine koaxial zur Drehachse angeordnete ringförmige Ablenklinse. Diese kann stationär abseits der Welle gelagert sein, um das Trägheitsmoment zu reduzieren und die Umgebung schneller zu scannen.

Um den Empfangsstrahl möglichst verlustarm innerhalb eines kleinen Volumens zum Detektor zu leiten, ist es von Vorteil, wenn zwischen der Aperturblende und dem Detektor ein Kollimator zum Kollimieren des Empfangsstrahls angeordnet ist.

Die Erfindung wird nachfolgend anhand von in den beigeschlossenen Zeichnungen dargestellten Ausführungsbeispielen näher erläutert. In den Zeichnungen zeigen:
Fig. 1 eine erste beispielhafte Ausführungsform eines Laserscanners gemäß der Erfindung beim Scannen einer Umgebung in einer schematischen Perspektivansicht von der Seite;
Fig. 2 den Laserscanner von Fig. 1 in einer ersten Stellung während des Scannens der Umgebung in einem Längsschnitt;
Fig. 3 den Laserscanner von Fig. 1 in einer zweiten Stellung während des Scannens der Umgebung im Längsschnitt gemäß Fig. 2;
Fig. 4 eine zweite beispielhafte Ausführungsform eines Laserscanners gemäß der Erfindung beim Scannen einer Umgebung in einer schematischen Perspektivansicht schräg von der Seite;
Fig. 5 den Laserscanner von Fig. 4 in einer ersten Stellung während des Scannens der Umgebung in einem Längsschnitt;
Fig. 6 den Laserscanner von Fig. 4 in einer zweiten Stellung während des Scannens der Umgebung im Längsschnitt gemäß Fig. 5;
Fig. 7 eine dritte beispielhafte Ausführungsform eines Laserscanners gemäß der Erfindung beim Scannen einer Umgebung in einem Längsschnitt; und
die Fig. 8 bis 10 jeweils eine beispielhafte Ausführungsform eines Empfängers eines Laserscanners gemäß der Erfindung, in einem Längsschnitt.

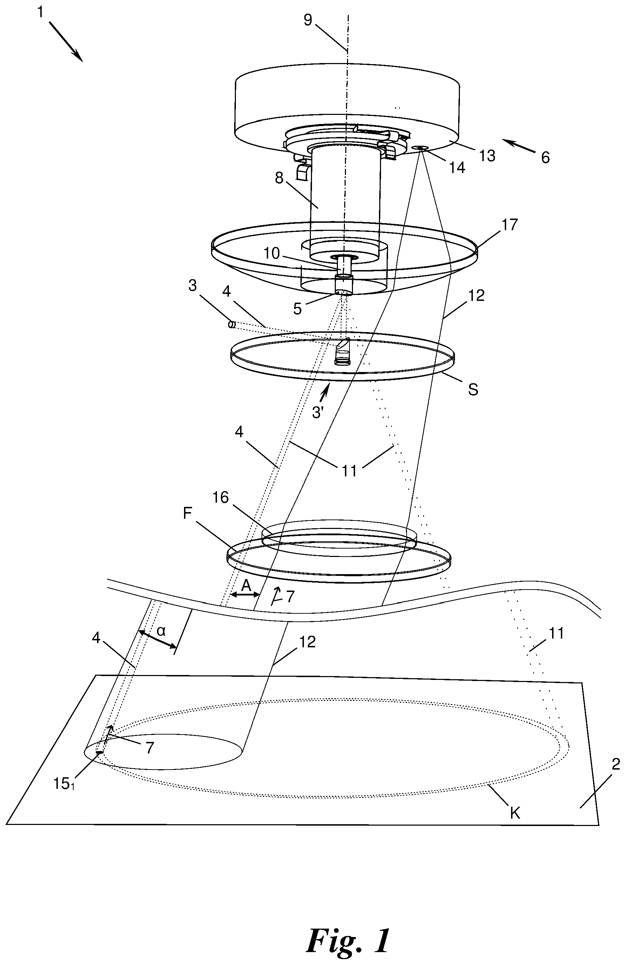

Die Fig. 1 bis 3 zeigen eine erste beispielhafte Ausführungsform eines Laserscanners 1 beim Scannen einer Umgebung 2, beispielsweise einer Landschaft, eines Steinbruchs, eines Gebäudes, eines Straßenzugs, einer Stadt, eines Gewässergrunds, einer Wolke usw. Der Laserscanner 1 kann stationär - optional drehbar - aufgestellt sein oder von einem Land-, Wasser- oder Luftfahrzeug mitgeführt werden, um die Umgebung 2 mobil zu scannen.

Die Komponenten des Laserscanners 1 sind in den Zeichnungen zur besseren Sichtbarkeit freigestellt gezeigt; selbstverständlich sind die Komponenten des Laserscanners 1 an Streben, Trägern und/oder einem Gehäuse des Laserscanners 1 gelagert (nicht gezeigt).

Um die Umgebung 2 zu scannen, umfasst der Laserscanner 1 einen Lasersender 3, der einen gepulsten oder modulierten, üblicherweise kollimierten Sendestrahl 4 aussendet, eine schräge, sich drehende Spiegelfläche 5, welche den Sendestrahl 4 auffächert und zur Umgebung 2 hin (optional über zumindest einen weiteren optischen Bauteil) ablenkt, und einen Empfänger 6, welcher den an der Umgebung 2 reflektierten Sendestrahl 4 als Empfangsstrahl 7 empfängt.

Aus der Laufzeit der Sende- und Empfangsstrahlen 4, 7 kann die Entfernung zur Umgebung 2 ermittelt und daraus - unter Kenntnis der Lage und Orientierung des Laserscanners 1 bzw. des Sendestrahls 4 - ein Modell der Umgebung 2, eine sogenannte "3D-Punktwolke", erstellt werden, z.B. in einer Recheneinheit des Laserscanners 1.

Die Spiegelfläche 5 ist an einer von einem Motor 8 um eine Drehachse 9 angetriebenen Welle 10 gelagert, u.zw. derart, dass sie mit der Welle 10 ohne Relativdrehung mitdreht, d.h. gegenüber der Welle 10 drehfest ist. Im dargestellten Beispiel ist die Spiegelfläche 5 optional achszentral an einem axialen Ende der Welle 10 montiert. Durch eine kontinuierliche Drehung der Welle 10 und damit der Spiegelfläche 5 um die Drehachse 9 wird der darauf gerichtete Sendestrahl 4 entlang eines Kegelmantels 11 aufgefächert, um die Umgebung 2 entlang eines Kreises K oder einer Ellipse zu scannen, bei einem drehbar aufgestellten oder mobilen Laserscanner 1 daher z.B. entlang einer Spiralbahn. In Fig. 1 wird der Kegelmantel 11 durch zwei seiner Sehnen (gepunktete Linien) symbolisiert.

Alternativ zur kontinuierlichen Drehung der Welle 10 könnte diese um die Drehachse 9 oszillierend drehen, sodass die Spiegelfläche 5 den auf sie gerichteten Sendestrahl 4 entlang eines Kegelmantelsegments auffächert (nicht gezeigt), um die Umgebung 2 entlang eines Kreis- oder Ellipsen-Bogens zu scannen, bei drehbar aufgestelltem oder mobilem Laserscanner 1 daher z.B. entlang gebogener Zick-Zack-Scanlinien.

Der Öffnungswinkel des zugrundeliegenden Kegels kann in allen Varianten frei gewählt werden und beispielsweise kleiner als 120°, z.B. kleiner als 90°, insbesondere kleiner als 60° sein, um den Kreis (bogen) K bzw. die Ellipse (den Ellipsen-Bogen) schmal zu halten.

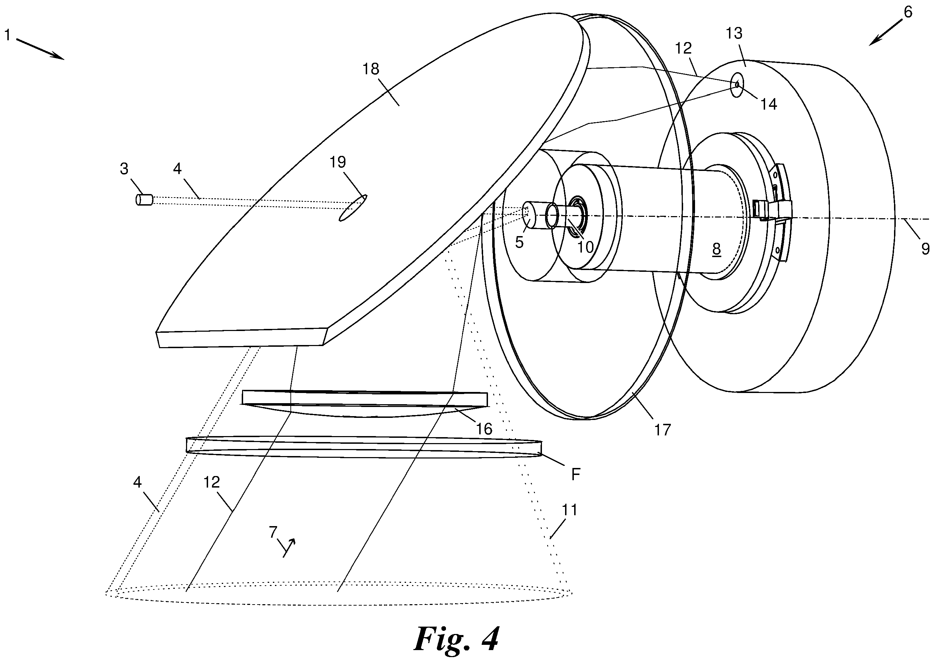

Der Lasersender 3 kann den Sendestrahl 4 auf verschiedene Weise auf die Spiegelfläche 5 richten. Im Beispiel der Fig. 1 bis 3 ist der Lasersender 3 dezentral angeordnet und der Laserscanner 1 weist einen von einer optionalen durchsichtigen Halterung (hier: einer Scheibe S) gehaltenen, in axialer Verlängerung der Drehachse 9 angeordneten Einkoppelspiegel 3' auf, welcher den Sendestrahl 4 entlang der Drehachse 9 auf die Spiegelfläche 5 umlenkt. Alternativ dazu kann der Lasersender 3 achszentral (Fig. 4 - 6) angeordnet sein und direkt axial auf die Spiegelfläche 5 gerichtet sein. In einer weiteren Alternative kann der Lasersender 3 oder der Einkoppelspiegel 3' dezentral angeordnet sein und den Sendestrahl 4 unter einem Winkel zur Drehachse 9 auf die Spiegelfläche 5 richten. In jeder Variante kann der Lasersender 3 stationär abseits der Welle 10 am Träger oder Gehäuse des Laserscanners 1 gelagert sein oder optional drehfest mit der Welle 10 verbunden sein.

Um den Empfänger 6 bzw. dessen Sichtfeld 12 dem Sendestrahl 4 nachzuführen, hat der Empfänger 6 eine Aperturblende 13, die ebenfalls gegenüber der Welle 10 drehfest an der Welle 10 gelagert ist. Das Sichtfeld 12 des Empfängers 6 ist jenes Volumen, aus welchem Lichtstrahlen, die auf den Empfänger 6 gerichtet sind, von diesem "gesehen", d.h. detektiert, werden können. Die Aperturblende 13 lässt eine Blendenöffnung ("Apertur") 14 für den Empfänger 6 frei und begrenzt auf diese Weise das Sichtfeld 12. Ihre jeweils drehfeste Lagerung an der Welle 10 führt zu einer fixen Relativlage der Spiegelfläche 5 und der Aperturblende 13, sodass das Sichtfeld 12 dem abgelenkten Sendestrahl 4 stets nachgeführt wird, um den Empfangsstrahl 7 im Sichtfeld 12 zu behalten.

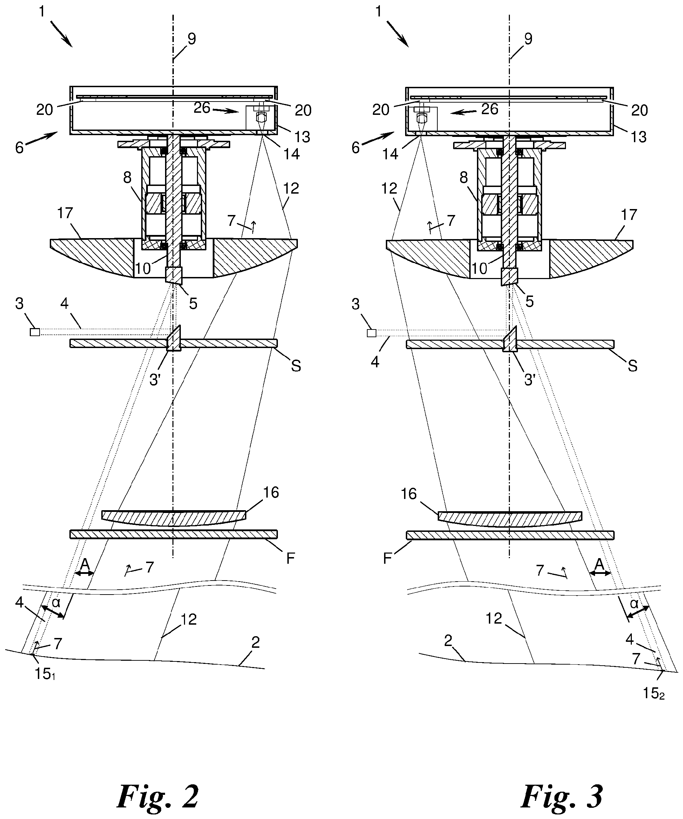

Die Fig. 2 und 3 illustrieren dieses Nachführen. In der in Fig. 2 abgebildeten Stellung der Welle 10 werden der Sendestrahl 4 und das Sichtfeld 12 gerade nach links abgelenkt, sodass der Sendestrahl 4 an einem ersten Abtastpunkt 15₁ der Umgebung 2 reflektiert wird, welcher im Sichtfeld 12 des Empfängers 6 liegt. In der in Fig. 3 abgebildeten Stellung der Welle 10 ist diese um 180° weitergedreht. Der Sendestrahl 4 und das Sichtfeld 12 sind deshalb in dieser Stellung nach rechts abgelenkt, sodass der Sendestrahl 4 an einem zweiten Abtastpunkt 15₂ der Umgebung 2 reflektiert wird, welcher im Sichtfeld 12 des Empfängers 6 liegt. Es versteht sich, dass entlang des gescannten Abtastkreises (bzw. der Abtastellipse) K in der Regel eine Vielzahl aufeinanderfolgender Abtastpunkte 15₁, 15₂, ..., allgemein 15ᵢ, liegt.

Das Sichtfeld 12 kann durch Einstellen der Lage und Orientierung der Apertur 14 oder weiterer optischer Bauteile auf verschiedene Weise ausgerichtet und begrenzt werden. Beispielsweise könnte der Sendestrahl 4 bereits beim Verlassen des Laserscanners 1 innerhalb des Sichtfelds 12 liegen (nicht gezeigt). Bevorzugt sind hingegen der von der Spiegelfläche 5 abgelenkte Sendestrahl 4 und das Sichtfeld 12 im Inneren und in der Nähe des Laserscanners 1 voneinander getrennt, z.B. an der optionalen Scheibe S.

Das Sichtfeld 12 kann beim Verlassen des Laserscanners 1, z.B. an einem optionalen Fenster F im nicht dargestellten Gehäuse des Laserscanners 1, zumindest geringfügig divergieren und somit die Form eines sehr spitzen Kegels haben. In diesem Fall können der Sendestrahl 4 und das Sichtfeld 12 einander in einem vorgegebenen Entfernungsbereich kreuzen, sodass lediglich Reflexionen an Abtastpunkten 15ᵢ, die innerhalb dieses Entfernungsbereichs im Sichtfeld 12 des Empfängers 6 liegen, empfangen werden können. Der Entfernungsbereich kann anhand der Divergenz des Sichtfeldes 12, des Abstands A zwischen Sendestrahl 4 und Sichtfeld 12 beim Verlassen des Laserscanners 1 und der Neigung des Sichtfeldes 12 zum Sendestrahl 4 eingestellt werden, optional auch dynamisch, z.B. durch einen entsprechend angesteuerten optischen Bauteil im Sichtfeld 12 oder im Strahlengang des Sendestrahls 4, beispielsweise auf Basis bereits gescannter Messpunkte.

Alternativ kann das divergierende Sichtfeld 12 derart ausgerichtet sein, dass der Sendestrahl 4 in einer vorgegebenen Entfernung vom Laserscanner 1 in seinen Kegel eintritt, ohne ihn zu kreuzen. In diesem Fall können Reflexionen an Abtastpunkten 15ᵢ, die in dieser Entfernung oder ferner liegen, im Empfänger 6 empfangen werden.

Alternativ zum divergierenden Sichtfeld 12, kann dieses parallelgerichtet, d.h. wie ein "kollimierter" Lichtstrahl, sein. Dazu weist der Laserscanner 1 gemäß Fig. 1 bis 3 eine Objektivlinse 16 (hier: eine einzige Sammellinse; alternativ: ein Linsensystem) auf, die aus Sicht des Empfängers 6 der Aperturblende 13 nachgeordnet ist und das Sichtfeld 12 parallelrichtet. Im gezeigten Beispiel ist die Objektivlinse 16 platzsparend innerhalb des Kegelmantels 11, zu welchem der Sendestrahl 4 aufgefächert wird, angeordnet; d.h. der Sendestrahl 4 läuft hier radial außen um die Objektivlinse 16 herum. Alternativ dazu kann die Objektivlinse 16 an einer anderen Stelle angeordnet sein, z.B. um das Sichtfeld 12 beim Verlassen des Laserscanners 1 außerhalb des Kegelmantels 11 des Sendestrahls 4 zu führen.

Das parallelgerichtete Sichtfeld 12 ist im Wesentlichen zylindrisch, wobei eine stets vorhandene geringe Rest-Divergenz α verbleibt, je nach Güte der Objektivlinse 16 z.B. weniger als 5°, meist weniger als 3°, insbesondere weniger als 1°. Auch dabei können der Sendestrahl 4 und das parallelgerichtete Sichtfeld 12 wie zuvor erläutert einander kreuzen, d.h. das parallelgerichtete Sichtfeld 12 zum Sendestrahl 4 geneigt sein, oder zueinander im Wesentlichen parallel verlaufen. Die Rest-Divergenz α wird im Beispiel der Fig. 1 bis 3 zur Nahbereichsunterdrückung ausgenutzt. Dazu ist das parallelgerichtete Sichtfeld 12 vom Sendestrahl 4 zunächst um einen Abstand A beabstandet. Erst nach einer vorgegebenen Entfernung jenseits des Nahbereichs, welche durch die Rest-Divergenz α und den Abstand A zwischen Sendestrahl 4 und dem Sichtfeld 12 beim Verlassen des Laserscanners 1 vorgegeben ist, tritt der Sendestrahl 4 in das Sichtfeld 12 ein, sodass Reflexionen an Auftreffpunkten 15ᵢ vom Empfänger 6 empfangen werden können. Unerwünschte Reflexionen des Sendestrahls 4 aus dem Nahbereich des Laserscanners 1, z.B. an Partikeln in der Luft, können vom Empfänger nicht empfangen werden, sie werden unterdrückt.

Die Spiegelfläche 5 und die Aperturblende 13 können in verschiedenen Relativlagen zueinander angeordnet werden. Im Beispiel der Fig. 1 bis 3 ist zwischen der Aperturblende 13 und der Spiegelfläche 5 der Motor 8 angeordnet. Alternativ dazu können die Aperturblende 13 und die Spiegelfläche 5 auf derselben Seite des Motors 8 angeordnet sein (nicht gezeigt).

Im Beispiel der Fig. 1 bis 3 ist zwischen der Aperturblende 13 und der Objektivlinse 16 eine optionale plankonvexe Ringlinse 17 angeordnet. Die plankonvexe Ringlinse 17 lenkt das Sichtfeld 12 vom Empfänger 6 aus gesehen zur Drehachse 9 hin ab, sodass die Apertur 14 nahe bei der Drehachse 9 liegen kann und zugleich das Sichtfeld 12 auf die Objektivlinse 16 gerichtet ist. Die Ringlinse 17 und die Objektivlinse 16 bilden ein optisches System, welches gemeinsam mit der Lage und Größe der Apertur 14 das Sichtfeld 12 bestimmt, z.B. die Blickrichtung und den Öffnungswinkel eines kegelförmigen Sichtfelds 12. Die Ringlinse 17 kann stationär abseits der Welle 10 am Träger oder Gehäuse des Laserscanners 1 oder an der Welle 10 gelagert sein.

Anstelle der plankonvexen Ringlinse 17 kann ein anderes stationär abseits der Welle 10 gelagertes oder an der Welle 10 drehfest gelagertes optisches Ablenkelement zum Ablenken des Sichtfeldes 12 zur Drehachse 9 hin verwendet werden, z.B. eine andersartige Linse, ein Prisma, ein Spiegel, usw. Alternativ dazu kann das optische Ablenkelement auch gänzlich entfallen und das Sichtfeld 12 direkt von der Apertur 14 auf die Objektivlinse 16 gerichtet bzw. von der Lage und Größe der Apertur 14 und der Objektivlinse 16 bestimmt sein.

In einer zweiten beispielhaften Ausführungsform gemäß den Fig. 4 bis 6 hat der Laserscanner 1 einen gegenüber der Drehachse 9 geneigten Umlenkspiegel 18. Die weiteren Komponenten dieser Ausführungsform sind, soweit sie jenen der zuvor beschriebenen ersten Ausführungsform der Fig. 1 bis 3 entsprechen, mit gleichen Bezugszeichen versehen. Der Umlenkspiegel 18 ist im Sichtfeld 12 und im Strahlengang des an der Spiegelfläche 5 abgelenkten Sendestrahls 4 angeordnet und lenkt das Sichtfeld 12 und den Sendestrahl 4 quer (d.h. orthogonal oder schräg) zur Drehachse 9 zur Umgebung 2 hin um. Dadurch wird der aufgefächerte Kegelmantel 11 des Sendestrahls 4 am Umlenkspiegel 18 geknickt.

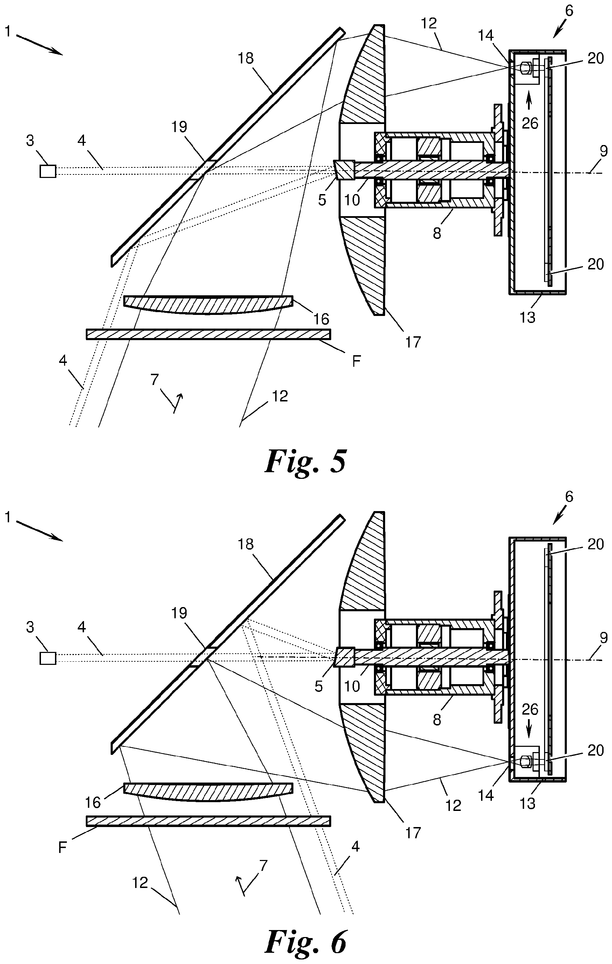

Im optionalen Beispiel der Fig. 4 bis 6 wird der von der Spiegelfläche 5 abgelenkte Sendestrahl 4 durch geeignete Lage und Größe des Sichtfelds 12, Schrägstellung der Spiegelfläche 5 und Lage des Umlenkspiegels 18 gegenüber diesem zu jedem Zeitpunkt am Umlenkspiegel 18 außerhalb des Sichtfelds 12 umgelenkt. Beispielsweise wird der abgelenkte Sendestrahl 4 in der in Fig. 5 abgebildeten Stellung der Welle 10, in welcher der Sendestrahl 4 und das Sichtfeld 12 auf einen linken Abtastpunkt der Umgebung 2 gerichtet sind, unterhalb des Sichtfelds 12 am Umlenkspiegel 18 umgelenkt. In der in Fig. 6 abgebildeten, um 180° weitergedrehten Stellung der Welle 10, in welcher der Sendestrahl 4 und das Sichtfeld 12 auf einen rechten Abtastpunkt der Umgebung 2 gerichtet sind, wird der abgelenkte Sendestrahl 4 dagegen oberhalb des Sichtfelds 12 am Umlenkspiegel 18 umgelenkt. Dasselbe gilt für jede Ausrichtung der Spiegelfläche 5 und zughörige Lage der Apertur 14 bei Drehung der Welle 10.

Gemäß den Fig. 4 bis 6 kann der Umlenkspiegel 18 eine optionale Durchgangsöffnung 19 aufweisen, durch welche hindurch der Sendestrahl 4 direkt auf die Spiegelfläche 5 gerichtet ist. Alternativ dazu kann die Öffnung 19 entfallen, z.B. wenn der Lasersender 3 oder ein Einkoppelspiegel an der der Spiegelfläche 5 zugewandten Seite des Umlenkspiegels 18 angeordnet ist.

Es versteht sich, dass das zuvor für die erste Ausführungsform der Fig. 1 - 3 beschriebene Zusammenwirken der weiteren Komponenten und ihre Varianten auch auf die zweite Ausführungsform der Fig. 4 - 6 anwendbar sind.

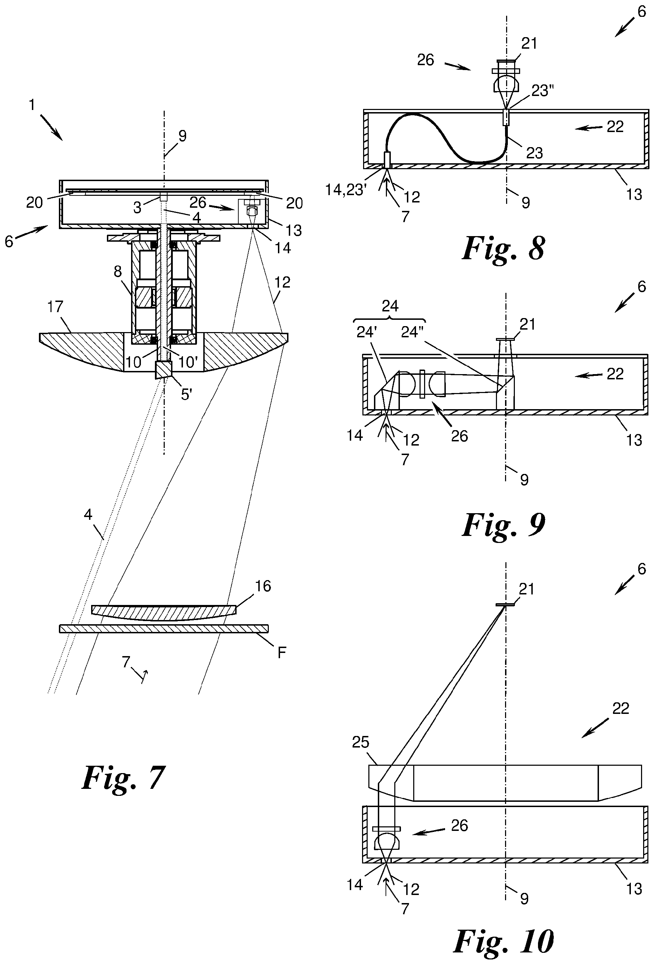

In einer dritten Ausführungsform des Laserscanners 1 gemäß Fig. 7, in welcher gleiche Komponenten wieder mit gleichen Bezugszeichen versehen und auf welche die Varianten der zuvor beschriebenen Ausführungsformen anwendbar sind, ist an der Welle 10 als optisches Element anstelle der Spiegelfläche 5 eine optisch brechende Keilscheibe 5' gegenüber der Welle 10 drehfest gelagert. Die Welle 10 ist dabei eine Hohlwelle, durch deren Hohlraum 10' der Lasersender 3 den Sendestrahl 4 entweder direkt (Fig. 7) oder über einen Einkoppelspiegel (nicht gezeigt) auf die Keilscheibe 5' aussendet. Die Keilscheibe 5' bricht den Sendestrahl 4 und fächert ihn dabei während der Drehung der Welle 10 entlang des Kegelmantels 11 (oder eines Kegelmantelsegments) auf, z.B. wie zuvor in Bezug auf die Spiegelfläche 5 beschrieben.

In weiteren Ausführungsformen (nicht gezeigt) kann ein anderes reflektierendes oder brechendes optisches Element zur Ablenkung des Sendestrahls 4 an der Welle 10 (z.B. dezentral oder achszentral am axialen Ende der Welle 10) drehfest gelagert sein, z.B. eine Spiegelpyramide oder eine optisch brechende Pyramide mit zwei, drei, vier, oder mehr gegenüber der Drehachse 9 geneigten Pyramidenseiten, auf welche der Sendestrahl 4 nacheinander auftrifft um pro Seite den Sendestrahl 4 entlang eines Kegelmantelsegments aufzufächern und die Umgebung 2 entlang eines Kreis- oder Ellipsenbogens abzutasten. Dabei hat die Aperturblende 13 für jede Pyramidenseite eine korrespondierende Apertur 14, welche das Sichtfeld 12 des Empfängers 6 dem an der korrespondierenden Pyramidenseite abgelenkten Sendestrahl 4 nachführt. Jene Teile des Empfängers 6, für welche die Aperturblende 13 mit ihren Aperturen 14 das Sichtfeld 12 gerade nicht in Richtung des Sendestrahls 4 ausrichtet, werden dabei optional temporär deaktiviert, z.B. mechanisch oder elektronisch.

Zum Empfangen des Empfangsstrahls 7 kann der Empfänger 6 des Laserscanners 1 einen auf verschiedene Weise gebildeten Detektor aufweisen, der entweder stationär abseits der Welle 10 gelagert ist oder drehfest an der Welle 10 .

In den Ausführungsformen der Fig. 1 - 7 weist der Empfänger 6 einen koaxial zur Drehachse 9 angeordneten ringförmigen Detektor 20 auf, welcher entweder stationär am Träger oder Gehäuse des Laserscanners 1 oder drehfest an der Welle 10 gelagert ist. In einer dazu alternativen Ausführungsform weist der Empfänger 6 einen Detektor auf, der einen kleineren Winkelbereich um die Drehachse 9 einnimmt und hinter der Apertur 14 entweder drehfest an der Welle 10 gelagert ist, sodass er sich mit der Aperturblende 13 mitdreht und besonders klein sein kann, oder stationär gelagert ist, sodass er stets den kleineren Winkelbereich abdeckt, welcher z.B. dem vorgenannten Kegelsegment entspricht.

Die Fig. 8 bis 10 zeigen jeweils eine beispielhafte Variante einer weiteren Ausführungsform des Empfängers 6 mit einem achszentralen, d.h. auf der Drehachse 9 angeordneten, stationär abseits der Welle 10 oder drehfest an der Welle 10 gelagerten Detektor 21 und einer Führungseinrichtung 22, welche den Empfangsstrahl 7 von der Aperturblende 13 zum Detektor 21 führt.

In der ersten Variante gemäß Fig. 8 ist die Führungseinrichtung 22 durch eine Glasfaser 23 gebildet. An ihrem Eingang 23' wird der Empfangsstrahl 7 in die Glasfaser 23 eingekoppelt, von der Glasfaser 23 zur Drehachse 9 geführt und dort an ihrem Ausgang 23" zum achszentralen Detektor 20 hin ausgekoppelt. Der Eingang 23' der Glasfaser 23 kann entweder in der Apertur 14 angeordnet sein oder selbst die Apertur 14 bilden.

In der zweiten Variante gemäß Fig. 9 ist die Führungseinrichtung 22 durch ein Periskop 24 gebildet. Das Periskop 24 hat einen ersten dezentralen Spiegel 24' hinter der Apertur 14 zum Lenken des Empfangsstrahls 7 zur Drehachse 9 und einen zweiten optional achszentralen Spiegel 24" zum Lenken des Empfangsstrahls 7 auf den achszentralen Detektor 21. Die Spiegel 24', 24" des Periskops 24 können entweder drehfest an der Welle 10 (hier: an der Aperturblende 14), oder als Ringspiegel ausgeführt stationär am Träger oder Gehäuse des Laserscanners 1 gelagert sein. Anstelle eines oder beider Spiegel 24', 24" kann das Periskop 24 ein oder mehrere Prismen zum Lenken des Empfangsstrahls 7 auf den achszentralen Detektor 21 aufweisen (nicht gezeigt).

In der dritten Variante gemäß Fig. 10 ist die Führungseinrichtung 22 durch ein Ablenklinse 25 gebildet. Diese kann wie in Fig. 10 dargestellt ringförmig sein und die Drehachse 9 umschließen, um auch stationär abseits der Welle 10 gelagert den Empfangsstrahl 7 auf den achszentralen Detektor 21 zu lenken. Alternativ dazu kann die Ablenklinse 25 einen kleineren Winkelbereich hinter der Apertur 14 um die Drehachse 9 einnehmen und an der Welle 10 drehfest gelagert sein, um den Empfangsstrahl 7 auf den achszentralen Detektor 21 zu lenken.

In jeder Ausführungsform des Empfängers 6 kann dieser wie in den Figuren dargestellt einen optionalen Kollimator 26 zwischen der Aperturblende 13 und dem Detektor 20, 21 aufweisen, um den Empfangsstrahl 6 zu kollimieren und zum Detektor 20, 21 zu führen.

Es versteht sich, dass die beschriebenen Ausführungsformen und Varianten sowohl einzeln als auch in vielfältigen Kombinationen verwendet werden können. Beispielsweise könnte in der zweiten beispielhaften Ausführungsform des Laserscanners 1 der Fig. 4 bis 6 anstelle der Spiegelfläche 5 die Keilscheibe 5' oder ein anderes reflektierendes oder brechendes optisches Element verwendet werden. Ferner kann in jeder der drei beispielhaft beschriebenen Ausführungsformen des Laserscanners 1 jeder Detektor der Beispiele der Fig. 7 bis 10 eingesetzt werden.

Die Erfindung ist nicht auf die dargestellten Ausführungsformen beschränkt, sondern umfasst alle Varianten, Modifikationen und deren Kombinationen, die in den Rahmen der angeschlossenen Ansprüche fallen.

## Patentansprüche

1. Laserscanner zum Scannen einer Umgebung (2), umfassend
einen Lasersender (3) zum Aussenden eines Sendestrahls (4) ;
eine um eine Drehachse (9) drehbare Welle (10);
ein den Sendestrahl (4) ablenkendes entweder reflektierendes oder brechendes optisches Element (5, 5'), welches zum Auffächern des Sendestrahls (4) entlang eines Kegelmantels (11) oder Kegelmantelsegments an der Welle (10) gegenüber dieser drehfest gelagert ist; und
einen Empfänger (6) zum Empfangen des an der Umgebung (2) reflektieren Sendestrahls (4) als Empfangsstrahl (7);
**dadurch gekennzeichnet, dass** der Empfänger (6) eine Aperturblende (13) aufweist, welche an der Welle (10) gegenüber dieser drehfest gelagert ist, um das Sichtfeld (12) des Empfängers (6) dem am optischen Element (5, 5') abgelenkten Sendestrahl (4) nachzuführen.

2. Laserscanner nach Anspruch 1, wobei das optische Element durch eine gegenüber der Drehachse (9) geneigte Spiegelfläche (5) oder eine Keilscheibe (5') gebildet ist, um den Sendestrahl (4) entlang eines Kegelmantels (11) aufzufächern.

3. Laserscanner nach Anspruch 1 oder 2, ferner umfassend eine der Aperturblende (13) aus Sicht des Empfängers (6) nachgeordnete Objektivlinse (16) zum Parallelrichten des Sichtfelds (12) des Empfängers (6).

4. Laserscanner nach Anspruch 3, wobei die Objektivlinse (16) im Inneren des Kegelmantels (11) oder Kegelmantelsegments angeordnet ist.

5. Laserscanner nach Anspruch 3 oder 4, wobei das parallelgerichtete Sichtfeld (12) des Empfängers (6) im Wesentlichen parallel zum Sendestrahl (4) ausgerichtet ist.

6. Laserscanner nach Anspruch 3 oder 4, wobei das parallelgerichtete Sichtfeld (12) des Empfängers (6) vom Empfänger (6) aus gesehen hinter der Objektivlinse (16) zum Sendestrahl (4) geneigt ist.

7. Laserscanner nach einem der Ansprüche 4 bis 6, ferner umfassend ein zwischen der Aperturblende (13) und der Objektivlinse (16) angeordnetes optisches Ablenkelement (17), welches das Sichtfeld vom Empfänger (6) aus gesehen zur Drehachse (9) hin ablenkt, bevorzugt eine Linse, besonders bevorzugt eine das optische Element umschließende plankonvexe Ringlinse.

8. Laserscanner nach einem der Ansprüche 1 bis 7, ferner umfassend einen im Strahlengang des Sendestrahls (4) und im Sichtfeld (12) des Empfängers (6) angeordneten, gegenüber der Drehachse (9) geneigten Umlenkspiegel (18) zum Umlenken des Sendestrahls (4) und des Sichtfelds (12) des Empfängers (6) quer zur Drehachse (9) zur Umgebung (2) hin.

9. Laserscanner nach Anspruch 8, wobei der Sendestrahl (4) am Umlenkspiegel (18) außerhalb des Sichtfelds (12) des Empfängers (6) umgelenkt wird.

10. Laserscanner nach einem der Ansprüche 1 bis 9, wobei der Empfänger (6) zum Empfangen des Empfangsstrahls (7) einen koaxial zur Drehachse (9) angeordneten ringförmigen Detektor (20) aufweist.

11. Laserscanner nach einem der Ansprüche 1 bis 9, wobei der Empfänger (6) zum Empfangen des Empfangsstrahls (7) einen achszentral angeordneten Detektor (21) aufweist und eine Führungseinrichtung (22) zum Führen des Empfangsstrahls (7) von der Aperturblende (13) zum Detektor (21).

12. Laserscanner nach Anspruch 11, wobei die Führungseinrichtung (22) durch eine Glasfaser (23) gebildet ist.

13. Laserscanner nach Anspruch 11, wobei die Führungseinrichtung (22) durch ein Periskop (24) gebildet ist.

14. Laserscanner nach Anspruch 11, wobei die Führungseinrichtung (22) durch eine Ablenklinse (25) gebildet ist, bevorzugt durch eine koaxial zur Drehachse (9) angeordnete ringförmige Ablenklinse.

15. Laserscanner nach einem der Ansprüche 10 bis 14, wobei zwischen der Aperturblende (13) und dem Detektor (20, 21) ein Kollimator (26) zum Kollimieren des Empfangsstrahls (7) angeordnet ist.
